# EUROPÄISCHE PATENTANMELDUNG

(11) **EP 4 309 825 A1**
(43) Veröffentlichungstag der Anmeldung: **24.01.2024**
(21) Anmeldenummer: 23185594.1
(22) Anmeldetag: 14.07.2023
(51) Int. Cl.: B21D 51/26, B65B 7/28

(54) **ZUFUHREINRICHTUNG ZUM ZUFÜHREN EINES DECKELS ZU EINEM VERSCHLIESSER**

(30) Priorität: 19.07.2022 EP 22185610; 17.08.2022 EP 22190809
(71) Anmelder: Ferrum Packaging AG, 5503 Schafisheim (CH)
(72) Erfinder: Müller, Thomas, 5745 Safenwil (CH); Gisler, Roger, 5000 Aarau (CH)
(74) Vertreter: IPS Irsch AG

(57) **Zusammenfassung**

Die Erfindung betrifft eine Zufuhreinrichtung (1001) zum Zuführen eines Deckels (101) zu einem Verschliesser (1000) umfassend eine Deckelführung (15A, 15B) zum Führen des Deckels (101) entlang einer Führungsebene (E) zu dem Verschliesser (1000), eine Deckelzufuhr zum Einbringen eines Deckels (101) in die Deckelführung (15A, 15B) und eine an der Deckelführung (15A, 15B) angeordnete Bewegungsvorrichtung (10), welche derart beweglich angeordnet ist, dass der Deckel (101) durch die Bewegungsvorrichtung (16) entlang der Führungsebene (E) bewegbar ist. Dabei ist die Deckelführung (15A, 15B) derart ausgeformt und an der Deckelzufuhr angeordnet, dass der Deckel (101) in der Deckelführung (15A, 15B) ausschliesslich parallel zur Führungsebene (E) bewegbar ist.

## Beschreibung

Die Erfindung betrifft eine Zufuhreinrichtung zum Zuführen von Deckeln, einen Verschliesser und ein Verfahren zum Zuführen eines Deckels.

Bei der Abfüllung von Getränkedosen oder Lebensmitteldosen durchlaufen die Dosen nach der Befüllung mit dem Getränk oder dem Lebensmittel einen Dosenverschliesser, wobei die befüllten Dosenkörper über einen Zuführweg einlaufen und über einen weiteren Zuführweg Dosendeckel einlaufen. Der Dosenverschliesser weist üblicherweise mehrere karussellförmig angeordnete, gleichartige Stationen auf, in denen jeweils eine Dose mit einem Dosendeckel verschlossen wird. Die Dosendeckel werden dabei auf die Dosenkörper geführt und mit einer Halteplatte eines Falzkopfes auf dem Dosenkörper gehalten. Dieses Halten dient auch der Fixierung der Dosen gegen ein Ausbrechen aus der von den Dosen in dem Dosenverschliesser durchlaufenen Kreisbahn aufgrund der Zentrifugalkraft. In dem Dosenverschliesser werden dabei die Dosenkörper mit dem Dosendeckel randseitig über eine Falzrolle gefalzt und somit verschlossen. In der Regel wird die Dose mit dem Dosendeckel dabei mittels des Falzkopfes zusätzlich um die eigene Symmetrieachse rotiert. Zur Rotation sind die Falzrollen und Falzköpfe an einem Falzrollenbolzen beziehungsweise einer Falzwelle angeordnet.

Ein gattungsgemässer Dosenverschliesser ist in der DE749636 und der DE4234115 A1 beschrieben. Der Dosenverschliesser umfasst eine Einspannvorrichtung zur Aufnahme einer zu verschliessenden Dose. Im Betriebszustand ist die zu verschliessende Dose in die Einspannvorrichtung eingebracht und durch diese in axialer und radialer Richtung gesichert. Ebenso ist ein Dosendeckel über der Dosenöffnung der zu verschliessenden Dose zentriert eingebracht. Die Dose weist im Bereich der Dosenöffnung einen umlaufenden Dosenflansch und der Dosendeckel einen umlaufenden Dosendeckelflansch auf. Zum Verschliessen der Dosenöffnung durch den Dosendeckel umfasst der Dosenverschliesser zusätzlich zwei um jeweils eine Achse drehbar gelagerte Falzrollen, die den Dosenflansch und den Dosendeckelflansch mittels einer im wesentlichen radial wirkenden Kraft miteinander verpressen, wobei die Verpressung durch ein kontinuierliches Abrollen in Umfangsrichtung entlang dem Umfang der Dosenöffnung erfolgt.

Zum Bereitstellen der Dosendeckel werden dabei Zufuhreinrichtungen verwendet, in welchen die Dosendeckel in einem Deckelstapel zugeführt werden und zum Aufbringen auf die Dosen mittels einer Abstapelvorrichtung vereinzelt werden. Eine derartige Zufuhreinrichtung ist in der EP 3 453 625 A1 offenbart.

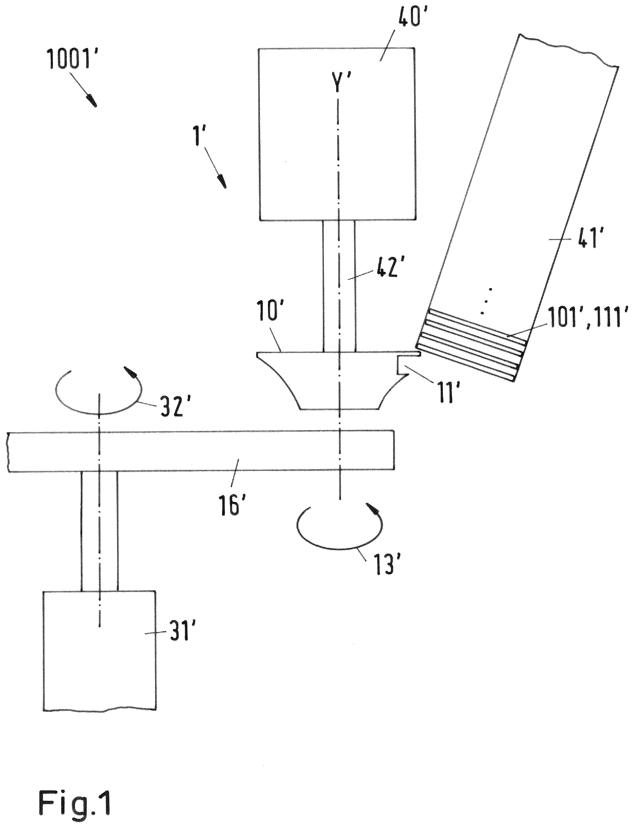

Zum besseren Verständnis der vorliegenden Erfindung wird im Folgenden eine aus dem Stand der Technik bekannte Zufuhreinrichtung für einen Dosenverschliesser anhand der Fig. 1 beschrieben.

Zur besseren Unterscheidung des bekannten Standes der Technik von der vorliegenden Erfindung werden im Rahmen dieser Anmeldung Bezugszeichen zu Merkmalen bekannter Vorrichtungen mit einem Hochkomma (in Fig. 1, 2A, 2B und 5A) versehen, während Merkmale zu erfindungsgemässen Vorrichtungen oder deren Bestandteilen kein Hochkomma tragen.

Die bekannte Zufuhreinrichtung 1001' gemäss Fig. 1 umfasst eine Abstapelvorrichtung 1' mit einer Abstapelschnecke 10' und eine nachfolgende Transport- und/oder Behandlungseinrichtung 16', welche einen separaten Antrieb 31' aufweist.

Die Abstapelschnecke 10' trennt und vereinzelt die Deckel 101' mithilfe einer spiralförmige Nut 11' aus dem Stapel 111'. Hierfür wird die Abstapelschnecke 10' mit einem eigenen Antrieb 40' angetrieben, welcher als ein Servoantrieb ausgestaltet ist.

Die zu fördernden Deckel 101' werden in der Deckelzuführung 41' zugeführt, welche unmittelbar oberhalb der Abstapelschnecke 10' angeordnet ist. Die Deckel 101' werden durch die Schwerkraft nach unten in Richtung der Abstapelschnecke 10' gefördert. Die Abstapelschnecke 10' wird durch den Antrieb 40' angetrieben, wodurch sie eine Rotationsbewegung um die Achse Y', welche durch einen Pfeil 13' angedeutet ist, durchführt. Die spiralförmige Nut 11' kommt jeweils mit einem Randbereich eines einzelnen Deckels 101' in Eingriff und ist derart geformt, dass sie einen einzelnen Deckel 101' aus der Zuführung 41' bewegen kann und diesen durch die Rotationsbewegung 13' der Abstapelschnecke 10' nach unten in Richtung der nachfolgenden Transport-und/oder Behandlungseinrichtung 16' fördern und abgeben kann. Nach der Abgabe eines einzelnen Deckels 101' an die nachfolgende Transport- und/oder Behandlungseinrichtung 16' rotiert die Abstapelschnecke 10' weiter und kann erneut einen einzelnen Deckel 101' aus der Zuführung 41' aufnehmen und an die nachfolgende Transport- und/oder Behandlungseinrichtung 16' fördern.

Die Transport- und/oder Behandlungseinrichtung 16' rotiert dabei in Richtung der mit einem Pfeil 32' angedeuteten Richtung. Der Antrieb 31' der nachfolgenden Transport- und/oder Behandlungseinrichtung 16' und der Antrieb 40' der Abstapelschnecke 10' sind derart aufeinander abgestimmt, dass die Abgabegeschwindigkeit der Abstapelschnecke 10' von Deckeln 101' aus der Zuführung 41' der Aufnahmegeschwindigkeit der nachfolgenden Transport-und/oder Behandlungseinrichtung 16' entspricht. So wird sichergestellt, dass für jede zu befüllende und zu verschliessende Dose (in Figur 1 nicht gezeigt) rechtzeitig ein Deckel 101' bereitgestellt wird und es nicht zu Verzögerungen oder Störungen kommt.

Um jedoch ein sauberes Abtrennen der Deckel 101' aus dem Stapel 111' zu ermöglichen, muss bei einem Formatwechsel (also einer Umstellung auf eine andere, insbesondere auch grössere Deckelgrösse / Behältergrösse) die Abstapelschnecke 10' ausgetauscht werden. Hierfür kann zum Beispiel die Abstapelschnecke 10' von der Welle 42' abgenommen werden und eine auf das neue Format angepasste Abstapelschnecke angebracht werden.

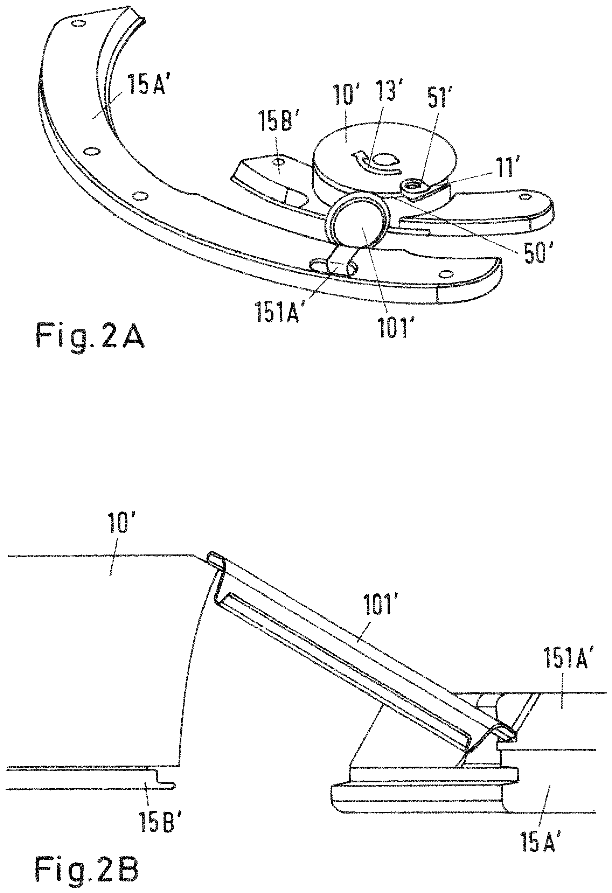

Dies wird genauer mit Bezug auf die Fig. 2A und 2B erläutert.

Mit manchen Verschliesser können verschiedene auf dem Markt vorhandene Deckel-Grössen abgestapelt und verarbeitet werden. Das zentrale Bauteil der Abstapelung ist dabei die Abstapelschnecke 10'. Diese vereinzelt die Deckel 101' vom Stapel und legt sie auf eine innere Deckelführung 15B' ab. Der Prozess der Vereinzelung erfolgt dabei über ein Messer 51', das an der Abstapelschnecke 10' befestigt ist. Durch die rotative Bewegung im Uhrzeigersinn in Richtung des Pfeils 13' sticht das Messer 51' in den Stapel ein. Der Deckel 101' wird dann über eine Spirale / die spiralförmige Nut 11' nach unten in die innere Deckelführung 15B' geführt.

Auf der anderen Seite liegt der Deckel 101' auf einer austauschbaren Auflage 151 A' der Deckelführung auf und wird dann über eine Rampe in eine äussere Deckelführung 15A' eingebracht. D.h. der Deckel 101' muss über eine schiefe Ebene, welche die unterschiedlich hoch gelegene Auflage 151A' und Deckelführung 15A' miteinander verbindet, geführt werden.

Deshalb muss der Deckelabstieg entlang der äusseren Deckelführung 15A' mit grossen Führungsnuten und Einlaufwinkeln realisiert werden, wodurch der Deckel 101' in seiner Bewegung sehr viel Spiel hat. Dies kann unter anderem dazu führen, dass der Deckel aus den Führungen springt.

Aufgabe der Erfindung ist es daher, eine Zufuhreinrichtung und einen Verschliesser bereitzustellen, welche die aus dem Stand der Technik bekannten nachteiligen Wirkungen vermeiden. Insbesondere sollen eine Zufuhreinrichtung und ein Verschliesser bereitgestellt werden, welche einen zuverlässigen Betrieb und Deckeltransport gewährleisten.

Die Aufgabe wird durch eine erfindungsgemässe Zufuhreinrichtung, einen erfindungsgemässen Verschliesser und durch das erfindungsgemässe Verfahren gelöst.

Erfindungsgemäss wird eine Zufuhreinrichtung zum Zuführen eines Deckels zu einem Verschliesser vorgeschlagen. Die Zufuhreinrichtung umfasst eine Deckelführung zum Führen des Deckels entlang einer Führungsebene zu dem Verschliesser, eine Deckelzufuhr zum Einbringen eines Deckels in die Deckelführung und eine an der Deckelführung angeordnete Bewegungsvorrichtung, welche derart beweglich angeordnet ist, dass der Deckel durch die Bewegungsvorrichtung entlang der Führungsebene bewegbar ist.

Dabei ist die Deckelführung derart ausgeformt und an der Deckelzufuhr angeordnet, dass der Deckel in der Deckelführung ausschliesslich parallel zur Führungsebene bewegbar ist.

Insbesondere bedeutet ausschliesslich parallel dabei, dass der Deckel (insbesondere mit seiner Oberfläche beziehungsweise Auflegefläche) in der Deckelführung, insbesondere durch die Bewegungsvorrichtung, nur parallel zu der Führungsebene bewegt werden kann (also nicht parallel zu irgendeiner anderen, von der Führungsebene unterschiedlichen Ebene mit unterschiedlicher Ausrichtung). Dabei kann die Oberfläche des Deckels beziehungsweise die Auflegefläche (mit welcher der Deckel auf der Deckelführung aufliegt) vollständig parallel zu der Führungsebene bewegt werden. Im Speziellen umfasst die Deckelführung also im Gegensatz zum Stand der Technik keine Rampe, welche den Deckel erst zu einer von der Führungsebene unterschiedlichen und anders ausgerichteten Rampenebene führt und dann parallel zur Führungsebene ausrichtet. Hierdurch kann ein Springen des Deckels in der Deckelführung vermieden werden. Im Rahmen der Erfindung ist unter parallel dabei echt parallel oder identisch zu verstehen. Ausserdem kann die Führungsebene horizontal verlaufen / angeordnet sein, sodass der Deckel horizontal ablegbar und bewegbar ist. Insbesondere ist der Deckel in der Deckelführung nur in einer einzigen Deckelebene bewegbar, welche parallel zu oder gleich der Führungsebene ist.

Unter der Deckelführung ist dabei insbesondere der Vorrichtungsteil zu verstehen, auf welchem der Deckel nach der Abstapelvorrichtung aufgelegt wird und in oder auf welchem der Deckel in Richtung des Verschliessers geführt wird. Besonders bevorzugt ist die Deckelführung stationär angeordnet.

In Ausführung der Erfindung kann die Deckelführung derart an der Deckelzufuhr angeordnet sein, dass der Deckel aus der Deckelzufuhr unmittelbar parallel zur Führungsebene in die Deckelführung einbringbar ist, im Speziellen unmittelbar in die Deckelebene einbringbar ist.

Bei besonders bevorzugten Ausführungsformen der Erfindung umfasst die Zufuhreinrichtung weiter eine Niederhaltevorrichtung, welche derart an (insbesondere über) der Deckelführung angeordnet ist, dass eine Bewegbarkeit des Deckels in einer Raumrichtung (insbesondere nach oben) einschränkbar ist.

Die Niederhaltevorrichtung kann eine Niederhaltefläche zur Einschränkung der Bewegbarkeit des Deckels umfassen und die Niederhaltefläche kann (echt) parallel zur Führungsebene, insbesondere vollständig parallel zur Führungsebene angeordnet sein.

Ausserdem kann die Deckelführung eine Ablegefläche, insbesondere eine erste und zweite Ablegefläche umfassen, auf welcher der Deckel (insbesondere mit der Auflegefläche / den Auflegeflächen) ablegbar ist, wobei die Ablegefläche derart parallel, insbesondere vollständig parallel zur Führungsebene verläuft, dass der Deckel ausschliesslich parallel zur Führungsebene bewegbar ist. Hierbei kann die Niederhaltefläche parallel, insbesondere vollständig parallel zu der Ablegefläche angeordnet sein, sodass die Ablegefläche auch parallel, insbesondere vollständig parallel zur Führungsebene angeordnet ist.

Die Deckelzufuhr kann eine Deckelzuführung zum Zuführen der Deckel in einem Deckelstapel und eine Abstapelvorrichtung zum Vereinzeln von Deckeln aus einem Deckelstapel umfassen. Die Deckelzuführung kann derart an der Abstapelvorrichtung angeordnet sein, dass die in dem Deckelstapel zuführbaren Deckel durch die Abstapelvorrichtung vereinzelt werden können, wobei die Deckelführung an der Abstapelvorrichtung angeordnet ist, sodass ein aus dem Deckelstapel vereinzelter Deckel von der Abstapelvorrichtung in die Deckelführung einbringbar ist.

Die Abstapelvorrichtung kann ein Abstapelelement, ein Abstützelement zum Abstützen des Deckelstapels sowie eine Nut zum Aufnehmen und Abführen eines (vom Deckelstapel) abgetrennten Deckels umfassen. Dabei kann die Nut an dem Abstapelelement und dem Abstützelement angeordnet, insbesondere in das Abstapelelement und das Abstützelement eingebracht sein. Also im Speziellen umfassen das Abstapelelement und das Abstützelement die Nut.

Ausserdem kann die Abstapelvorrichtung ein Vereinzelungselement umfassen, welches derart an (einem ersten Ende) der Nut angeordnet ist, dass der Deckel durch das Vereinzelungselement von dem Deckelstapel abtrennbar und durch die Nut aufnehmbar ist (also in die Nut eingebracht werden kann).

Dabei kann das Abstützelement ein vom Abstapelelement separates Element und an dem Abstapelelement angeordnet sein, sodass eine Abstützfläche des Abstützelementes derart zu dem Vereinzelungselement angeordnet ist, dass der Deckelstapel auf der Abstützfläche abstützbar ist und der Deckel von dem Deckelstapel abtrennbar ist. Das Abstützelement ist also insbesondere ein selbstständiges, vom Abstapelelement getrenntes und / oder unabhängiges Element.

Der Deckelstapel kann also auf der Abstützfläche abgestützt werden und durch eine Bewegung wie z.B. eine Rotation der Abstapelvorrichtung kann das Vereinzelungselement zwischen den Deckelstapel und den abzutrennenden Deckel eingeführt werden, wobei der Deckel dann über die Nut zu einer nachgeschalteten Vorrichtung wie einer Deckelführung geführt wird. Selbstverständlich kann der Deckelstapel bei der Bewegung der Abstapelvorrichtung auch teilweise auf dem Abstapelelement abgestützt sein. Insbesondere unmittelbar vor dem Abtrennen des Deckels durch das Vereinzelungselement wird der Deckelstapel jedoch auf der Abstützfläche abgestützt.

Da das Abstützelement ein vom Abstapelelement separates Element ist, können die Werkzeugwechselzeiten massiv reduziert werden, da bei einem Formatwechsel lediglich das Abstützelement (oder alternativ das Abstapelelement) angepasst werden muss und nicht die ganze Abstapelvorrichtung ausgetauscht werden muss.

Bei einem Formatwechsel ändern sich unter anderem die Dicke und / oder der Radius des Deckels. Folglich muss ein Abstand zwischen der Abstützfläche und dem Vereinzelungselement angepasst werden, da so gewährleistet wird, dass das Vereinzelungselement an der korrekten Stelle in den Deckelstapel einsticht, um einen einzigen Deckel abzutrennen.

In der Praxis kann das Vereinzelungselement als ein im Stand der Technik bekanntes Messer ausgestaltet sein. Ausserdem kann das Vereinzelungselement von dem Abstapelelement umfasst werden, also insbesondere ein integraler Bestandteil des Abstapelelements sein. Alternativ kann das Vereinzelungselement ein von Abstapelelement und Abstützelement separates Element sein, welches an dem Abstapelelement und / oder Abstützelement angeordnet beziehungsweise (insbesondere austauschbar) befestigt ist.

Unter dem ersten Ende der Nut kann insbesondere ein Eingangsbereich für den Deckel in die Nut verstanden werden. Das Abstützelement kann direkt an dem Abstapelelement angeordnet beziehungsweise daran befestigt sein. Unter der Nut kann insbesondere eine längliche Vertiefung im Abstapelelement und dem Abstützelement zur Führung des Deckels verstanden werden. Im Speziellen kann die Nut auch als eine Fuge oder Rille bezeichnet werden.

In Ausführung der Erfindung kann eine Position der Abstützfläche relativ zum Vereinzelungselement veränderbar beziehungsweise anpassbar sein, um den Abstand zwischen der Abstützfläche und dem Vereinzelungselement anzupassen. Hierfür kann das Abstützelement derart austauschbar an dem Abstapelelement angeordnet (beziehungsweise befestigt) sein, dass die Position der Abstützfläche relativ zum Vereinzelungselement veränderbar ist. D.h. das Abstützelement kann durch ein anderes Abstützelement ausgetauscht werden, bei welchem die Abstützfläche anders ausgeformt und / oder positioniert ist. Dafür kann das Abstützelement zum Beispiel mittels einer lösbaren Schraubverbindung an dem Abstapelelement befestigt sein. Ausserdem kann das Abstützelement derart verschiebbar an dem Abstapelelement angeordnet sein, dass die Position der Abstützfläche relativ zum Vereinzelungselement veränderbar ist. Zum Beispiel kann durch eine Verstellung des Abstützelements in der Höhe die Position relativ zum Vereinzelungselement angepasst werden. Alternativ kann auch das Abstapelelement oder das Vereinzelungselement austauschbar oder verschiebbar sein.

In Ausgestaltung der Erfindung kann die Abstapelvorrichtung als eine Abstapelschnecke ausgestaltet sein und die Nut kann spiralförmig entlang der Abstapelschnecke verlaufen. So kann der Deckel insbesondere von oben in einer spiralförmigen Bewegung nach unten zu einer Deckelführung (als Teil einer nachgeschalteten Vorrichtung) abgeführt werden.

In einer besonders bevorzugten Ausführungsform ist die Abstützfläche eine Fase (also eine abgeschrägte Abstützfläche), insbesondere eine sichelförmige Fase.

Die Abstapelvorrichtung kann derart rotierbar angeordnet sein, dass die Deckel durch die Rotation der Abstapelvorrichtung vereinzelt werden können. Hierfür kann die Abstapelvorrichtung über eine Welle mit einem Antrieb wie einem Servoantrieb verbunden sein. Dafür kann das Abstapelelement einen Aufnahmebereich, insbesondere eine Aufnahmeöffnung für die Welle umfassen. Folglich ist das Abstützelement über das Abstapelelement mit der Welle verbunden und das Abstapelelement kann als ein Grundelement verstanden werden, über welches die anderen Komponenten an der Welle befestigt werden und folglich mit dem Antrieb verbunden werden.

In einer besonders bevorzugten Ausführungsform umfasst das Abstapelelement die Aufnahmeöffnung, das Abstützelement ist abnehmbar an dem Abstapelelement befestigt und das Vereinzelungselement ist ein vom Abstapelelement und Abstützelement separates Element, welches abnehmbar an dem Abstützelement befestigt ist.

Um zu gewährleisten, dass der Deckel in der Deckelführung ausschliesslich parallel zur Führungsebene bewegbar ist, kann das Abstapelelement (beziehungsweise die Abstapelschnecke), teilweise in der Deckelführung (besonders bevorzugt in einer der Schienen und / oder rotierbar) angeordnet sein, beziehungsweise in einer Aussparung der Deckelführung (beziehungsweise einer der Schienen). So ist das Abstapelelement nicht so weit von der Führungsebene beabstandet und die Deckelführung derart ausgeformt und an der Deckelzufuhr angeordnet, dass das «ausschliesslich parallel zur Führungsebene bewegen» ermöglicht wird.

Ausserdem kann die Deckelführung eine erste Leitfläche und eine zweite Leitfläche umfassen, wobei der Deckel derart zwischen der ersten Leitfläche und der zweiten Leitfläche angeordnet werden kann, dass der Deckel durch die relative Bewegung der Bewegungsvorrichtung zu der ersten Leitfläche und der zweiten Leitfläche zu dem Verschliesser führbar ist.

Die Deckelführung kann eine erste Schiene und eine zweite Schiene umfassen. Die zweite Schiene kann parallel zur ersten Schiene verlaufen. Ausserdem kann die erste Schiene die erste Leitfläche und / oder die erste Ablegefläche sowie die zweite Schiene die zweite Leitfläche und / oder die zweite Ablegefläche umfassen, sodass der Deckel durch die erste und die zweite Schiene zum Verschliesser führbar ist. Die erste und zweite Schiene können als äussere und innere Deckelführung ausgestaltet sein. Dabei können die äussere und innere Deckelführung jeweils aus mehreren Segmenten zusammengesetzt sein und austauschbare Elemente beziehungsweise Segmente umfassen (welche z.B. bei einem Formatwechsel ausgetauscht werden können).

Erfindungsgemäss wird weiter ein Verschliesser vorschlagen, welcher eine Station mit einer Vielzahl von insbesondere karussellförmig angeordneten Verschliessvorrichtungen, eine Behälterzufuhr für Behälter, insbesondere mit einem Produkt gefüllte Behälter zu der Station, eine erfindungsgemässe Zufuhreinrichtung und einen Auslauf für verschlossene Behälter von der Station umfasst.

Erfindungsgemäss wird ausserdem ein Verfahren zum Zuführen eines Deckels zu dem Verschliesser vorgeschlagen. Das Verfahren umfasst das Einbringen des Deckels in die Deckelführung und das Führen des Deckels entlang der Führungsebene zu dem Verschliesser. Dabei ist die Deckelführung derart ausgeformt und an der Deckelzufuhr angeordnet, dass der Deckel in der Deckelführung ausschliesslich parallel zur Führungsebene bewegt wird.

Die Abstapelvorrichtung kann dazu geeignet sein, die über die Deckelzuführung zugeführten Deckel zu fördern und teilungsgerecht an eine nachgelagerte Transport- und/oder Behandlungseinrichtung (wie die Deckelführung und / oder die Verschliessvorrichtungen) abzugeben.

Die Nut kann dabei in einen Randabschnitt des Deckels eingreifen und diesen dann in Richtung der nachgelagerten Deckelführung fördern. Mit anderen Worten werden die Deckel einzeln aus der Deckelzuführung herausbewegt. Eine Förderung der Deckel findet insbesondere nur dann statt, wenn sich die Abstapelvorrichtung bewegt, insbesondere rotiert.

Unter einer teilungsgerechten Übergabe kann verstanden werden, dass die Abstapelvorrichtung auf die Bewegungsvorrichtung abgestimmt ist. Die Übergabe der Deckel an die Bewegungsvorrichtung findet also insbesondere nicht kontinuierlich statt, sondern getaktet, d.h. dann, wenn ein Deckel für einen befüllten und zu verschliessenden Behälter in der Verschliessvorrichtung des Verschliessers bereitgestellt werden soll. Diese Taktung kann beispielsweise über die Geometrie der Nut und / oder über die Geometrie der Abstapelvorrichtung selbst und / oder über den Antrieb der Abstapelvorrichtung realisiert werden.

Die Bewegungsvorrichtung kann in Form einer rotierenden Bewegungsvorrichtung ausgebildet sein. Auch lineare Bewegungsvorrichtung, beispielsweise in Form von Förderbändern, sind möglich.

Somit kann der Deckel durch die Bewegungsvorrichtung in Bewegung versetzt werden, die Richtung der Deckelbewegung wird jedoch durch die Deckelführung insbesondere die erste und zweite Leitfläche vorgegeben. Dabei ist der Deckel vorzugsweise auf der Deckelführung abgestützt / wird durch die Deckelführung getragen und wird nicht wie im Stand der Technik auf der Bewegungsvorrichtung abgelegt (also wird nicht durch die Bewegungsvorrichtung getragen). Der Deckel kann also derart auf der Deckelführung abstützbar sein, dass der Deckel durch die Deckelführung getragen wird.

Die Bewegungsvorrichtung kann also eine relative Bewegung zu der ersten Leitfläche und der zweiten Leitfläche ausführen, d. h. insbesondere, dass die erste Leitfläche und die zweite Leitfläche (beziehungsweise die Schienen / Deckelführung) stationär (also unbeweglich) angeordnet sind, wobei sich die Bewegungsvorrichtung an der ersten Leitfläche und der zweiten Leitfläche vorbei bewegt und so den Deckel zwischen den Leitflächen bewegt. Vorzugsweise ist die Bewegungsvorrichtung entlang der ersten Leitfläche und der zweiten Leitfläche bewegbar, insbesondere zwischen der ersten Leitfläche und der zweiten Leitfläche bewegbar, sodass der Deckel zwischen den Leitflächen bewegbar ist.

Zum Tragen / Abstützen des Deckels kann die Deckelführung die Ablegefläche, vorzugsweise die erste und zweite Ablegefläche umfassen, auf welcher / welchen der Deckel angeordnet werden kann und auf / über welche der Deckel durch die Bewegungsvorrichtung bewegbar ist. Somit wäre der Deckel entlang der ersten und zweiten Leitfläche und auf der (ersten und zweiten) Ablegefläche bewegbar. Schräge Leitflächen (mit einem Winkel ungleich 90° im Vergleich zu einer Deckeloberfläche) können jedoch auch als Ablegeflächen fungieren, sodass der Deckel auf den schrägen Leitflächen angeordnet werden kann.

Besonders bevorzugt wird der Deckel ausschliesslich durch die Ablegefläche / Ablegeflächen oder die schrägen Leitflächen getragen und nicht auf der Bewegungsvorrichtung abgelegt.

Durch eine derartige Deckelführung wird also insbesondere eine einfachere und stabilere Deckelführung bereitgestellt. Der Deckel muss insbesondere nicht mehr auf einem Begasungsrotor abgelegt werden, sondern kann bis zum Zusammenführen mit dem Behälter auf der Deckelführung aufliegen. Da der Deckel nicht mehr auf dem Begasungsrotor aufliegt, kann eine grössere Vielfalt an Dosenformen (besonders in Bezug auf einen Neckbereich des Behälters) verschlossen werden.

Um eine einfache und schnelle Anpassung an verschiedene Deckelformate und Formen zu ermöglichen, können die erste und zweite Leitfläche beziehungsweise Schiene derart verschiebbar zueinander angeordnet sein, dass ein Abstand zwischen der ersten und zweiten Leitfläche veränderbar ist. So kann die Wechselzeit von Maschinenteilen im Verschliesser deutlich reduziert werden.

Ausserdem kann die Bewegungsvorrichtung einen Mitnehmer umfassen. Vorzugsweise ist der Mitnehmer derart an der Bewegungsvorrichtung angebracht, dass der Deckel durch den Mitnehmer aufnehmbar und durch den Mitnehmer in der Deckelführung bewegbar ist. Der Mitnehmer ist dabei also der Teil der Bewegungsvorrichtung, durch welchen der Deckel kontaktiert und bewegt wird.

In der Deckelführung bewegbar bedeutet dabei insbesondere, dass der Mitnehmer den Deckel an den Leitflächen entlang und über die Leitflächen oder Ablegeflächen bewegen kann. Hierfür dann der Mitnehmer bewegbar zwischen der ersten Leitfläche und der zweiten Leitfläche (gegebenenfalls auch zwischen der ersten und zweiten Ablegefläche) angeordnet sein.

In der Praxis kann die Bewegungsvorrichtung eine Vielzahl von Mitnehmern umfassen, sodass eine Vielzahl der Deckel durch die Vielzahl der Mitnehmer aufnehmbar und durch die Deckelführung bewegbar ist. Vorzugsweise kann die Vielzahl der Mitnehmer entlang eines Umfangs der Bewegungsvorrichtung verteilt angeordnet sein. Hierbei kann die Vielzahl der Mitnehmer kreisförmig entlang des Umfangs der Bewegungsvorrichtung angeordnet sein. Besonders bevorzugt ist die Bewegungsvorrichtung dabei an einer Welle befestigt und durch diese Welle rotierbar um eine Achse angeordnet, sodass der Deckel durch eine Rotation der Bewegungsvorrichtung bewegbar ist. Die Bewegungsvorrichtung kann also eine rotierbare Bewegungsvorrichtung sein. Hierfür ist die Bewegungsvorrichtung vorzugsweise scheibenförmig, ringförmig, sternförmig oder kreisringförmig ausgestaltet und die Welle in einem Mittelpunkt der Bewegungsvorrichtung angeordnet.

An der Bewegungsvorrichtung angeordnete Mitnehmer können derart auf einer Oberfläche der Bewegungsvorrichtung (also insbesondere der Scheibe / des Kreisrings) angeordnet sein, dass sie sich in Richtung der Achse erstrecken, um welche die Welle rotiert, beziehungsweise können auf einer Oberfläche der Bewegungsvorrichtung (also insbesondere der Scheibe / des Kreisrings) angeordnet sein, welche sich senkrecht zur Achse erstreckt, um welche die Welle rotiert. Alternativ zur rotierbaren Bewegungsvorrichtung kann auch eine linear bewegliche Bewegungsvorrichtung verwendet werden.

Die Bewegungsvorrichtung kann mit einem nach oben-gerichteten Mitnehmer unter der ersten und zweiten Schiene oder mit einem nach unten-gerichteten Mitnehmer über der ersten und zweiten Schiene angeordnet sein. Hierbei ist der Mitnehmer vorzugsweise in einer Ausnehmung zwischen der ersten und zweiten Schiene bewegbar. Zwischen der ersten und der zweiten Schiene kann also derart eine Ausnehmung vorgesehen sein, dass die Bewegungsvorrichtung (beziehungsweise Mitnehmer) zur Bewegung des Deckels durch die Ausnehmung bewegbar ist.

Ausserdem kann die erste und / oder zweite Schiene durch eine Vielzahl von Schienenelementen gebildet werden. Alternativ zu den Schienen können die Leitflächen auch die beiden seitlichen Begrenzungsflächen einer in ein Führungselement eingebrachten Schienennut sein.

Der Deckel kann (von unten) durch die Leitflächen beziehungsweise Ablegeflächen getragen / gestützt werden, während die Niederhaltevorrichtung die Bewegbarkeit des Deckels nach oben einschränkt, indem der Deckel zwischen den Leitflächen beziehungsweise Ablegeflächen und der Niederhaltevorrichtung angeordnet ist / bewegt wird.

Besonders bevorzugt kann die Deckelführung ausserdem eine Begasungsvorrichtung umfassen. Diese Begasungsvorrichtung kann an einem (der Verschliessvorrichtung) zugewandten Seite der ersten und / oder zweiten Schiene angeordnet sein. Durch die Begasungsvorrichtung wird der Behälter vor dem Auflegen des Deckels begast. Die Begasung kann mit einem Gas wie Kohlenstoffdioxid oder Stickstoff erfolgen.

Während die erste und zweite Schiene bevorzugt derart ausgeformt sind, dass der Deckel radial geführt wird und sich somit vorzugsweise koradial zur Bewegungsvorrichtung bewegt, kann die Begasungsvorrichtung derart ausgeformt sein, dass der Deckel in einem Begasungsbereich der Begasungsvorrichtung linear geführt wird. Dies hat der Vorteil, dass die Begasungswerte verbessert und die Übergabe zum Behälter optimiert werden kann.

Die Begasung erfolgt also bevorzugt durch die stationär an den (stationären) Schienen angeordnete Begasungsvorrichtung. Die Begasung muss nicht mehr durch einen Begasungsrotor / die Bewegungsvorrichtung erfolgen.

Der Deckel muss also insbesondere nicht mehr auf dem Begasungsrotor abgelegt werden, sondern kann bis zum Zusammenführen mit dem Behälter auf der Deckelführung aufliegen. Dies hat den Vorteil, dass die Störkonturen vom Begasungsrotor beim Aufstieg des Behälters entfallen. Somit können kostensparende und hygienischere Bewegungsvorrichtungen (wie z.B. Deckelrotoren) konstruiert werden.

Die erste und zweite Schiene sind mit den Leit- und / oder Ablegeflächen vorzugsweise so ausgestaltet, dass diese nach oben offen sind. Damit kann ein Reinigungsmedium ungehindert die Deckelauflage (also die Leit- und / oder Ablegeflächen) reinigen.

Vorzugsweise führt die erfindungsgemässe Zufuhreinrichtung die Deckel von der Abstapelvorrichtung bis zur Übergabe auf den Behälter. Nach dem Abstapelprozess, bei welchem die Deckel durch die Abstapelvorrichtung von dem Stapel einzeln getrennt werden, liegt der Deckel dabei auf der Deckelführung. Dabei kann die Deckelführung mit Bewegungsvorrichtung zumindest teilweise in einem Arbeitsraum des Verschliessers unterhalb der Abstapelvorrichtung angeordnet sein.

Der Deckel wird auf eine Öffnung des Behälters aufgelegt und der Behälter mit dem Deckel verschlossen. Das Verschliessen des Behälters kann dabei das Positionieren des Behälters auf einer Hubstation, das Falzen des Deckels an den Behälter mittels wenigstens einer Falzrolle, insbesondere mit zwei Falzrollen, und dem Falzkopf umfassen. Abschliessend kann der verschlossene Behälter aus dem Arbeitsraum des Verschliesser abgeführt werden.

Dabei ist der Arbeitsraum der Raum des Verschliessers, in welchem der Behälter vorzugsweise mit dem Deckel verschlossen wird, insbesondere der Raum, in welchem ein Falzprozess durch die Station stattfindet. Vorzugsweise wird der Arbeitsraum von einem Gehäuse umgeben und grenzt so den Arbeitsraum des Verschliessers ab (und ermöglicht so das Bilden einer Hygienezone).

Insbesondere kann das Gehäuse als eine Verkleidung, Umhüllung, Verschalung oder Ummantelung angesehen werden, welche den Arbeitsraum zumindest teilweise umgibt. Dabei kann das Gehäuse den Arbeitsraum nach Aussen abschliessen und / oder abschirmen, sodass eine Atmosphäre im Arbeitsraum hygienisch von der Umgebung abgetrennt wird.

Die Verschliessvorrichtung kann einen Verschliesskopf zum Verschliessen des Behälters mit dem Deckel umfassen. Dabei kann der Verschliesskopf Falzmittel zum Falzen des Deckels an den Behälter umfassen. Die Falzmittel können dabei eine Falzrolle und einen Falzkopf sein. Der beziehungsweise jeder Verschliesskopf kann also mindestens eine Falzrolle (besonders bevorzugt zwei Falzrollen) und einen Falzkopf umfassen. Dabei kann der Verschliesskopf um eine Falzachse rotierbare Falzwelle beziehungsweise Falzrollenbolzen umfassen, wobei an einem Ende der jeweiligen Falzwelle / des jeweiligen Falzrollenbolzens das Falzmittel angeordnet ist (Falzkopf und Falzrolle sind also insbesondere über jeweilige Falzwelle / den jeweiligen Falzrollenbolzen rotierbar).

Der erfindungsgemässe Verschliesser beziehungsweise die Station kann weiter die Hubstation (beziehungsweise eine Vielzahl von Hubstationen) zum Anheben des Behälters umfassen. Die Hubstationen können dabei in der Station gegenüber der Verschliessköpfe angeordnet sein.

Der erfindungsgemässe Verschliesser ist bevorzugt als ein Dosenverschliesser ausgestaltet. Der Dosenverschliesser weist üblicherweise mehrere karussellförmig angeordnete gleichartige Verschliessstationen (von vorzugsweise Verschliessköpfen und Hubstationen) auf, in denen jeweils eine Dose mit einem Dosendeckel verschlossen wird.

Dabei kann der Behälter eine Dose und der Deckel ein Dosendeckel sein, welche durch den Dosenverschliesser miteinander gefalzt werden.

Der Dosenverschliesser umfasst zum Verschliessen der Dose bevorzugt mehrere Verschliessköpfe (wie vorangehend beschrieben mit mehreren Falzrollen und einem Falzkopf). Im Betriebszustand werden die Falzrollen mit ihrem jeweiligen Falzprofil in Kontakt mit einem Dosendeckelflansch des Dosendeckels und einem Dosenflansch der Dose gebracht. Durch Rotation der Dose wird dann die Falzrolle in Umfangsrichtung der Dose rotiert, wobei der Dosenflansch mit dem Dosendeckelflansch gefalzt wird. Zur Rotation der Dose wird die Dose bevorzugt zwischen dem Falzkopf und einer Stütze (insbesondere der Hubstation) eingespannt, wobei der Falzkopf mit der Falzwelle um die Falzachse rotiert wird.

Im Rahmen der Erfindung kann unter der Dose ein rotationssymmetrischer Behälter verstanden werden, welcher mittels des Dosenverschliessers und der zugehörigen Falzrolle verschlossen wird. Eine Dose kann vorzugsweise ein Metall, insbesondere Aluminium oder Stahl umfassen.

Prinzipiell kann der Verschliesser bevorzugt mindestens zwei Arten Falzrollen mit vorzugsweise unterschiedlichen Falzprofilen umfassen (wobei der entsprechende Verschliesskopf Falzrollen beider Arten umfasst), sodass Dosen nach einem Doppelfalzprinzip verschlossen werden können, bei welchem die Dosen in der Regel in zwei Stufen verschlossen werden. Je eine Art Falzrolle ist dabei für eine Stufe zuständig. Die erste Art Falzrolle fertigt einen Vorfalz an, während die zweite Art Falzrolle die Dose / das Gebinde komplett verschliesst.

Dosendeckel und Dosenkörper können vor dem eigentlichen Falzprozess an einem definierten Punkt zusammengeführt werden. Das Zuführen der Dosendeckel erfolgt dabei durch die erfindungsgemässe Zufuhreinrichtung, auf welcher die Dosendeckel aufliegen. Die Dosenkörper werden durch die Behälterzuführung zugeführt. Die Dosenkörper gelangen von der Behälterzuführung auf eine der jeweiligen Hubstationen (welche in die Station integriert sind). Auf einer Umdrehung der Station führen die Hubstationen vorzugsweise eine kurvengesteuerte Hubbewegung aus, um die Dosenkörper von unten an die Dosendeckel und später den Falzkopf einzufahren.

Prinzipiell kann der erfindungsgemässe Verschliesser analog zu den bereits aus dem Stand der Technik bekannten Dosenverschliessern sein, unterscheidet sich jedoch in der Zufuhreinrichtung beziehungsweise Abstapelvorrichtung, um so die Nachteile des Standes der Technik zu vermeiden.

Im Folgenden werden die Erfindung und der Stand der Technik anhand von Ausführungsbeispielen unter Bezugnahme auf die Zeichnungen näher erläutert.
- Fig. 1: eine schematische Seitenansicht einer Zufuhreinrichtung des Standes der Technik;
- Fig. 2A: eine perspektivische Ansicht einer Abstapelvorrichtung des Standes der Technik mit Deckelführung;
- Fig. 2B: eine Seitenansicht der Abstapelvorrichtung des Standes der Technik mit Deckelführung gemäss Fig. 2A;
- Fig. 3: eine Draufsicht eines erfindungsgemässen Dosenverschliessers;
- Fig. 4: eine schematische Seitenansicht einer erfindungsgemässen Abstapelvorrichtung mit Deckelführung;
- Fig. 5A: eine perspektivische Ansicht einer Zufuhreinrichtung des Standes der Technik;
- Fig. 5B: eine perspektivische Ansicht einer erfindungsgemässen Zufuhreinrichtung;
- Fig. 6: eine perspektivische Ansicht einer erfindungsgemässen Abstapelvorrichtung;
- Fig. 7: eine schematische Seitenansicht einer erfindungsgemässen Zufuhreinrichtung;
- Fig. 8: eine Seitenansicht einer erfindungsgemässen Zufuhreinrichtung;
- Fig. 9: eine Draufsicht einer erfindungsgemässen Zufuhreinrichtung;
- Fig. 10: eine Seitenansicht einer erfindungsgemässen Deckelführung mit Niederhaltevorrichtung.

Fig. 1, 2A und 2B wurden bereits vorangehend bei der Darstellung des Standes der Technik beschrieben.

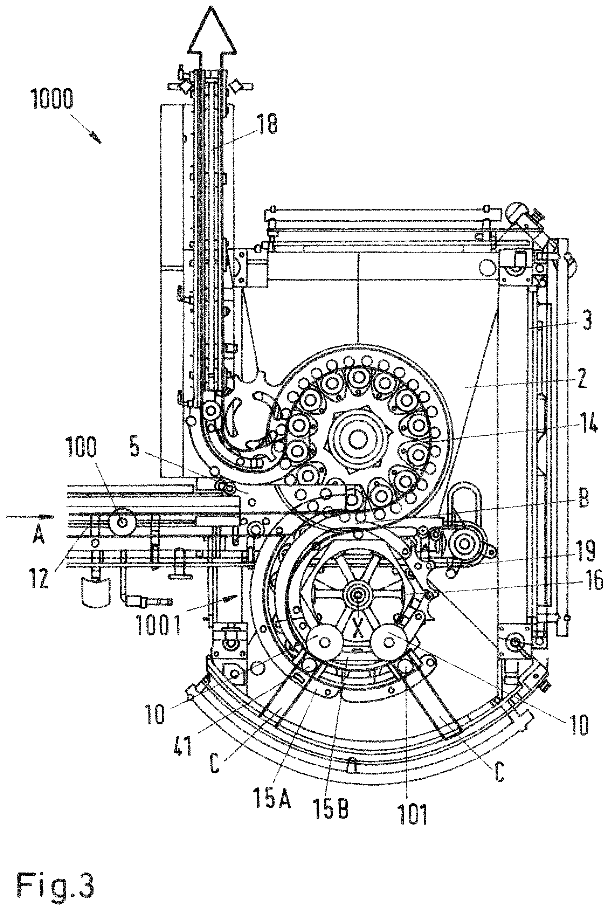

Fig. 3 zeigt eine Draufsicht eines erfindungsgemässen Dosenverschliessers 1000. Der Dosenverschliesser 1000 gemäss Fig. 3 umfasst zwei Deckelzuführungen 41 zum Zuführen von Deckeln 101 in einem Deckelstapel zu einer Zufuhreinrichtung 1001, welche die Deckel 101 zu einer Dose 100 transportiert.

Dabei umfasst die Zufuhreinrichtung 1001 eine Bewegungsvorrichtung 16, welche derart beweglich angeordnet ist, dass der Deckel 101 durch die Bewegungsvorrichtung 16 zur Dose 100 bewegt werden kann. Dafür ist die Bewegungsvorrichtung 16 an einer Welle befestigt und durch diese Welle rotierbar um eine Achse X angeordnet, sodass der Deckel 101 durch eine Rotation der Bewegungsvorrichtung 16 ausschliesslich parallel einer Führungsebene bewegbar ist.

Ausserdem umfasst die Zufuhreinrichtung 1001 eine an der Bewegungsvorrichtung 16 angeordnete Deckelführung 15A, 15B zum Führen des Deckels 101 zu der Dose 100. Dafür hat die Deckelführung 15A, 15B eine erste Schiene 15A und eine zur ersten Schiene parallel verlaufende zweite Schiene 15B, wobei der Deckel 101 derart zwischen den Schienen 15A, 15B angeordnet wird, dass der Deckel 101 durch die Bewegung eines Mitnehmers 19 der Bewegungsvorrichtung 16 zwischen den Schienen 15A, 15B bis zum Punkt B ausschliesslich parallel zur Führungsebene geführt wird, wo der Deckel 101 mit der entlang A über die Behälterzufuhr 12 einlaufenden Dose 100 vereint wird.

Die an der Bewegungsvorrichtung 16 angeordneten Mitnehmer 19 sind dabei derart auf einer Oberfläche der Bewegungsvorrichtung 16 verteilt und angeordnet, dass sie die auf der Deckelführung 15A, 15B angeordneten Deckel 101 in Bewegung versetzen können.

Ausserdem umfasst der Verschliesser 1000 einen Falzprozess / Station 14 mit Verschliess- / Falzstationen zum Verschliessen der Dose 100 mit dem Deckel 101. Dabei ist der Falzprozess 14 in einem von einem Gehäuse 3 umgebenen Arbeitsraum 2 des Dosenverschliessers 1000 angeordnet.

Der Deckel 101 dabei wird entlang des Pfeiles C durch die Deckelzuführungen 41 in den Arbeitsraum 2 des Dosenverschliesser 1000 eingebracht und von der Deckelführung 15A, 15B zur Dose 100 geführt.

Hierbei werden die Deckel 101 durch eine Abstapelvorrichtung von dem Deckelstapel vereinzelt und auf den Schienen 15A, 15B abgelegt. Die in der Deckelzuführung 41 zugeführten Deckel 101 werden also über eine rotierende Abstapelschnecke 10 der Abstapelvorrichtung entnommen und an die nachgelagerte Deckelführung 15A, 15B übergeben, welche als Förderstrecke mit der Bewegungsvorrichtung 16 in Form eines Transportsterns 16, durch wessen Mitnehmer 19 die von der Abstapelschnecke 10 abgestapelten Deckel 101 übergeben werden, ausgebildet ist. Durch Rotation der Bewegungsvorrichtung 16 werden die Deckel 101 also weiter transportiert.

Dann werden die Dosen 100 mit Deckel 101 durch eine Begasungsvorrichtung 5 begast, zum Falzprozess 14 weitergeführt und dort verschlossen.

Dabei werden die Dosen 100 mit Deckel 101 eingespannt und durch die Falzstationen verschlossen. Die verschlossene Dose wird durch einen weiteren Rotor in einen Dosenausgang 18 gefördert.

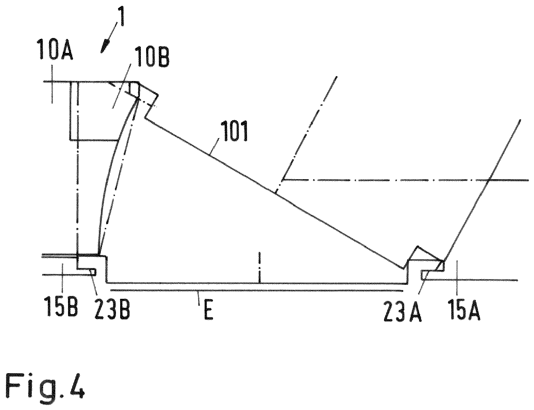

Fig. 4 zeigt eine schematische Seitenansicht einer Abstapelvorrichtung 1 mit Deckelführung 15A, 15B.

Die Abstapelvorrichtung 1 umfasst ein Abstapelelement 10A und eine Abstützelement 10B, auf welchem der Deckelstapel abgestützt werden kann. Durch die Abstapelvorrichtung 1 kann der Deckel unmittelbar in beziehungsweise parallel zu der Führungsebene E in die Deckelführung 15A, 15B abgelegt werden.

Die Deckelführung 15A, 15B umfasst eine erste Schiene 15A und eine zweite Schiene 15B, welche als äussere Deckelführung 15A und als innere Deckelführung 15B ausgestaltet sind und den Deckel 101 entlang der Führungsebene E zu dem Verschliesser (hier nicht dargestellt) führen können.

Die Deckelführungen 15A, 15B sind derart ausgeformt und zueinander angeordnet, dass der Deckel 101 in der Deckelführung 15A, 15B ausschliesslich parallel zur Führungsebene E bewegbar ist, d.h. der Deckel 101 ist bei seiner Bewegung über die Deckelführung 15A, 15B mit seiner Oberfläche permanent parallel zur Führungsebene E ausgerichtet.

Die äussere Deckelführung 15A umfasst eine erste Ablegefläche 23A und die innere Deckelführung 15B umfasst eine zweite Ablegefläche 23B, auf welchen der Deckel 101 ablegt werden kann. Hierbei sind die Ablegefläche 23A, 23B vollständig parallel zur Führungsebene E angeordnet.

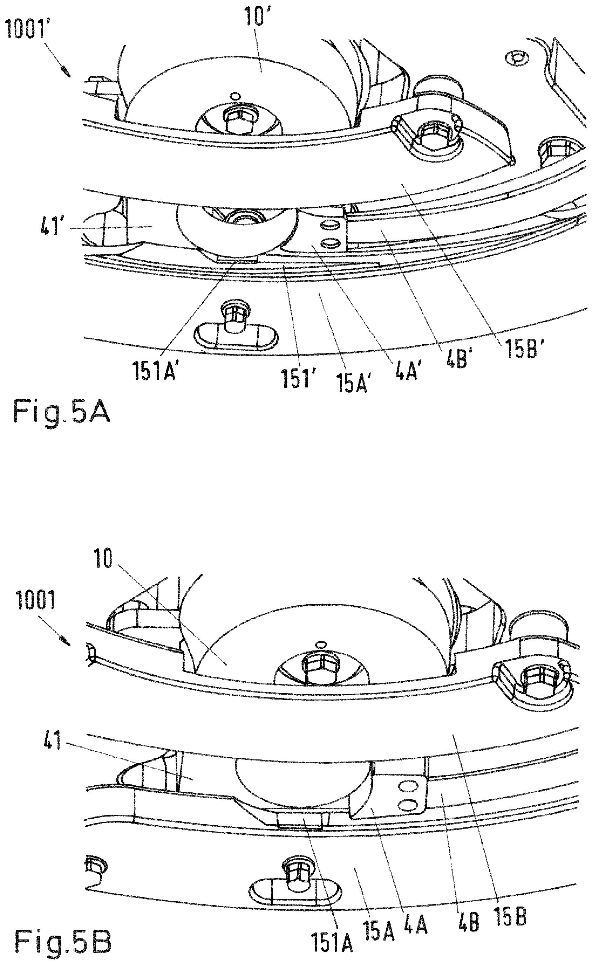

Fig. 5A zeigt eine perspektivische Ansicht der Zufuhreinrichtung 1001' des Standes der Technik und Fig. 5B zeigt eine perspektivische Ansicht einer erfindungsgemässen Zufuhreinrichtung 1001.

Die Zufuhreinrichtung 1001' gemäss Fig. 5A umfasst die äussere und innere Deckelführung 15A', 15B' zum Führen des Deckels zu dem Verschliesser (hier nicht dargestellt). Die äussere Deckelführung 15A' umfasst zudem die austauschbare Auflage 151A'. Ausserdem umfasst die Zufuhreinrichtung 1001' die Deckelzuführung 41' zum Zuführen eines Deckels.

Auch die Zufuhreinrichtung 1001 gemäss Fig. 5B umfasst die äussere und innere Deckelführung 15A, 15B (auch mit austauschbarer Auflage 151A) zum Führen des Deckels zu dem Verschliesser (hier nicht dargestellt) sowie die Deckelzuführung 41 zum Einbringen des Deckels in die Deckelführungen 15A, 15B, jedoch sind die äussere und innere Deckelführung 15A, 15B derart ausgeformt und an der Deckelzuführung 41 angeordnet, dass der Deckel durch die Bewegungsvorrichtung ausschliesslich parallel zur Führungsebene (hier nicht dargestellt) bewegbar ist.

Dabei bedeutet ausschliesslich parallel, dass der Deckel nach Ablegen in die Deckelführungen 15A, 15B nur parallel zu der Führungsebene bewegt werden kann. Die Deckelführung 15A, 15B umfassen im Gegensatz zum Stand der Technik gemäss Fig. 5A also keine Rampe 151', welche den Deckel erst zu einer von der Führungsebene unterschiedlichen und anders ausgerichteten Rampenebene führt und dann parallel zur Führungsebene ausrichtet. Hierdurch kann ein Springen des Deckels in der Deckelführung 15A, 15B vermieden werden. Da der Deckelabstieg entlang der äusseren Deckelführung 15A' mit grossen Führungsnuten und Einlaufwinkeln realisiert werden muss (aufgrund der Rampe 151'), hat der Deckel sehr viel Spiel. Dieses Spiel kann dazu führen, dass die Deckel aus den Führungen springen oder zu einem Stau im Verschliesser führen.

Durch das Führen parallel zur Führungsebene kann also ein Springen des Deckels beim Übergang von der Rampe 151' und somit ein störungsanfälliger Deckelabstieg in der äusseren Deckelführung vermieden werden. Folglich kann eine erhöhte Prozesssicherheit gewährleistet werden.

Zudem umfasst Fig. 5A eine Niederhaltevorrichtung mit erstem und zweitem Niederhalteelement 4A', 4B'. Während eine Niederhaltefläche der Niederhalteelemente 4A', 4B' des Standes der Technik zumindest teilweise entlang der Rampe 151' ausgerichtet ist, ist die Niederhaltefläche der erfindungsgemässen Niederhalteelemente 4A, 4B vollständig parallel zur Führungsebene ausgerichtet.

Einen weiteren Vorteil ergibt sich somit, da der Deckel von den Niederhalteelementen 4A, 4B präziser geführt werden kann und nach obenoffene Deckelführungen 15A, 15B verwendet werden können, welche unter anderem einfacherer zu reinigen sind.

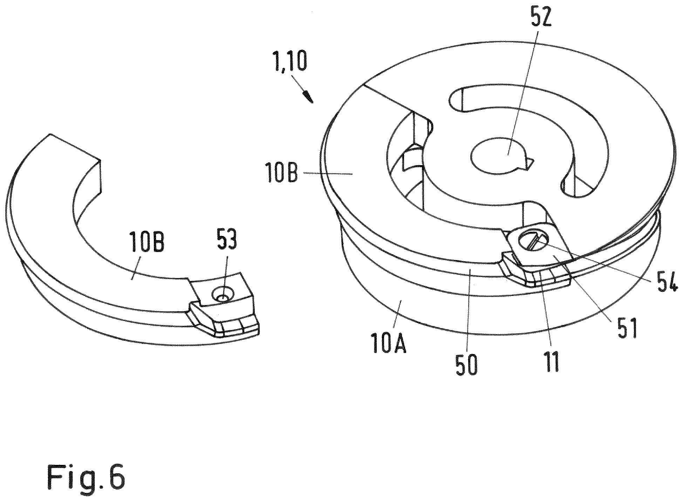

Fig. 6 zeigt eine perspektivische Ansicht einer erfindungsgemässen Abstapelvorrichtung 1 mit einem abnehmbaren beziehungsweise austauschbaren Abstützelement 10B.

Die Abstapelvorrichtung 1 zum Vereinzeln von Deckeln aus dem Deckelstapel umfasst eine Abstapelschnecke 10 mit einem ein Abstapelelement 10A zum Abtrennen eines Deckels von dem Deckelstapel, das Abstützelement 10B, eine spiralförmige Nut 11 zum Abführen des abgetrennten Deckels, welche sich von einem oberen Ende der Abstapelschnecke 10, an welchem der Deckel durch die Nut 11 aufgenommen wird, zu einem unteren Ende erstreckt, an welchem der abgetrennte Deckel abgegeben wird. Dabei umfassen das Abstapelelement 10A und das Abstützelement 10B die Nut 11.

Ausserdem umfasst die Abstapelvorrichtung 1 beziehungsweise die Abstapelschnecke 10 ein Vereinzelungselement 51, welches derart an einem ersten Ende der Nut 11, also an einem Eingangsbereich für den Deckel in die Nut 11, angeordnet ist, dass der Deckel durch das Vereinzelungselement 51 von dem Deckelstapel abgetrennt werden kann und in die Nut 11 eingeführt werden kann.

Das Abstützelement 10B ist ein vom Abstapelelement 10A separates Element, welches an dem Abstapelelement 10A befestigt werden kann. Dabei umfasst das Abstützelement 10B eine Befestigungsöffnung 53, durch welche eine Schraube 54 zur Befestigung des Vereinzelungselementes 51 am Abstützelement 10B eingebracht werden kann. Das Abstützelement 10B wird hingegen von der Unterseite an dem Abstapelelement 10A befestigt.

Dabei ist das Vereinzelungselement 51 ein vom Abstapelelement 10A separates Vereinzelungselement 51, welches zum Beispiel als ein Messer 51 ausgestaltet ist, welches mit der in die Öffnung 53 einbringbaren Schraube an dem Abstützelement 10B befestigt wird. Dies hat den Vorteil, dass das Messer 51 bei Abnutzung einfach ausgetauscht werden kann.

Alternativ könnte das Vereinzelungselement 51 ein integraler Bestandteil des Abstapelelements 10A oder Abstützelements 10B sein. Also das Abstapelelement 10A oder das Abstützelement 10B könnten das Vereinzelungselement 51 umfassen. Durch die Befestigungsöffnung 53 könnte dann eine Schraube zur Befestigung des Abstützelementes 10B am Abstapelelement 10A eingebracht werden.

Weiter umfasst das Abstützelement 10B eine als sichelförmige Fase 50 ausgestaltete Abstützfläche 50, auf welcher der Deckelstapel im Betriebszustand vor dem Abtrennen eines Deckels abgestützt wird. Dafür ist die Abstützfläche 50 derart zum Vereinzelungselement 51 positioniert, dass der Deckel von dem Deckelstapel abgetrennt werden kann. Dies wird gewährleistet, indem ein Höhenunterschied zwischen Abstützfläche 50 und Vereinzelungselement 51 derart ausgestaltet ist, dass er im Wesentlichen einer Dicke des abzutrennenden Deckels entspricht. D. h. der Deckel wird über die Fase 50 und das Vereinzelungselement 51 von dem Deckelstapel separiert.

Eine schnelle Formatanpassung der Abstapelvorrichtung 1 wird durch den zweiteiligen Aufbau mit Abstapelelement 10A und Abstützelement 10B gewährleistet. Das Abstapelelement 10A umfasst eine Aufnahmeöffnung 52 für eine Welle (welche ein zusätzlicher Teil der Abstapelvorrichtung sein kann). Folglich ist das Abstützelement 10B über das Abstapelelement 10A mit der Welle verbunden und das Abstapelelement 10A ist ein Grundelement, über welches die anderen Komponenten an der Welle befestigt werden. So kann das Abstützelement 10B einfach ausgetauscht werden, ohne dass die gesamte Abstapelschnecke 10 von der Welle abgenommen werden muss,

Der Formatwechsel wird dabei ermöglicht, da das Abstützelement 10B je nach Deckelgrösse eine unterschiedliche Fase 50 hat.

Der Deckel muss kurz vor dem Einstich des Vereinzelungselementes tangential zur oberen Kante der Abstapelvorrichtung 1 liegen. Dies wird durch die Form beziehungsweise Position der Fase 50 gesteuert.

Durch das erfindungsgemässe separate Abstützelement 10B wird jedoch nicht nur ein Formatwechsel vereinfacht. Der Deckelstapel liegt bei der Produktion ständig auf der Abstapelschnecke 10 auf. Dadurch entsteht Verschleiss. Bei hohem Verschleiss muss nur noch das Abstützelement 10B ausgetauscht werden. Bisher musste man die gesamte Abstapelschnecke 10 wechseln, wenn der Verschleiss der Fase zu gross war.

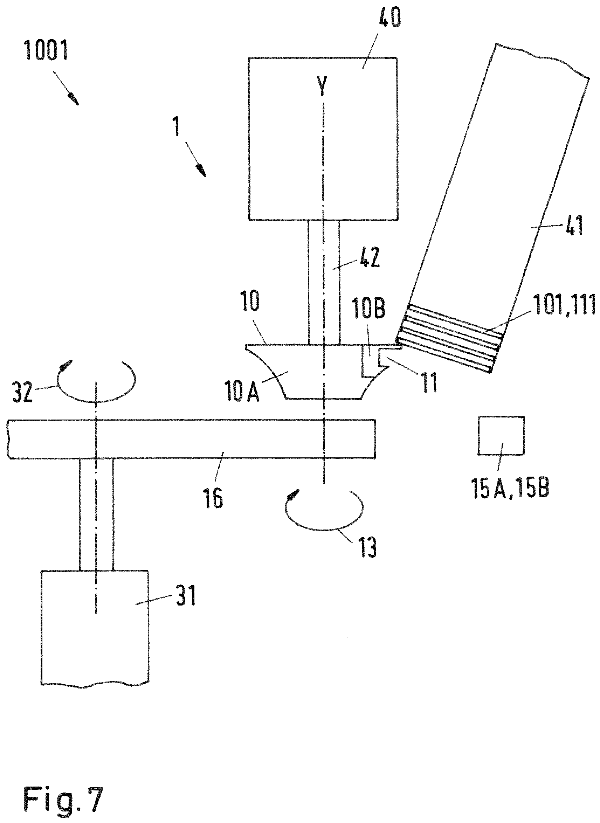

Fig. 7 zeigt eine schematische Seitenansicht einer erfindungsgemässen Zufuhreinrichtung 1001, welche die Abstapelvorrichtung 1 mit der Abstapelschnecke 10 und die nachfolgende Deckelführung 15A, 15B mit Bewegungsvorrichtung 16 umfasst, wobei die Bewegungsvorrichtung 16 einen separaten Antrieb 31 aufweist.

Die Abstapelschnecke 10 trennt und vereinzelt die Deckel 101 mithilfe der spiralförmigen Nut 11 aus dem Stapel 111. Hierfür wird die Abstapelschnecke 10 mit einem Servoantrieb 40 angetrieben, mit welchem sie über die Welle 42 verbunden ist.

Die zu fördernden Deckel 101 werden in der Deckelzuführung 41 zugeführt, welche unmittelbar oberhalb der Abstapelschnecke 10 angeordnet ist. Die Deckel 101 werden durch die Schwerkraft nach unten in Richtung der Abstapelschnecke 10 gefördert. Die Abstapelschnecke 10 wird durch den Antrieb 40 angetrieben, wodurch sie eine Rotationsbewegung um die Achse Y ausführt, welche durch einen Pfeil 13 angedeutet ist.

Die spiralförmige Nut 11 kommt jeweils mit einem Randbereich eines einzelnen Deckels 101 in Eingriff und ist derart geformt, dass sie einen einzelnen Deckel 101 aus der Zuführung 41 bewegen kann und diesen durch die Rotationsbewegung 13 der Abstapelschnecke 10 nach unten in Richtung der Deckelführung 15A, 15B mit Bewegungsvorrichtung 16 fördern und abgegeben kann. Nach der Abgabe eines einzelnen Deckels 101 an die nachfolgende Deckelführung 15A, 15B rotiert die Abstapelschnecke 10 weiter und kann erneut einen einzelnen Deckel 101 aus der Zuführung 41 aufnehmen und an die nachfolgende Deckelführung 15A, 15B fördern.

Die Bewegungsvorrichtung 16 rotiert dabei in die mit einem Pfeil 32 angedeuteten Richtung. Der Antrieb 31 der Bewegungsvorrichtung 16 und der Antrieb 40 der Abstapelschnecke 10 sind derart aufeinander abgestimmt, dass die Abgabegeschwindigkeit der Abstapelschnecke 10 von Deckeln 101 aus der Zuführung 41 der Aufnahmegeschwindigkeit der Bewegungsvorrichtung 16 entspricht. So wird für jede zu befüllende und zu verschliessende Dose rechtzeitig ein Deckel 101 bereitgestellt.

Um ein sauberes Abtrennen der Deckel 101 aus dem Stapel 111 zu ermöglichen, kann bei einem Formatwechsel (also eine Umstellung auch eine andere, insbesondere auch grössere Deckelgrösse / Behältergrösse) das Abstützelement 10B der Abstapelschnecke 10 ausgetauscht werden.

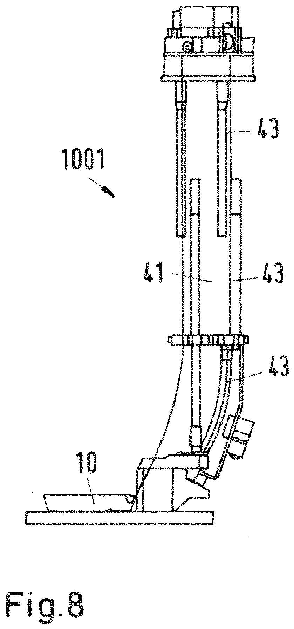

Fig. 8 zeigt eine Seitenansicht der erfindungsgemässen Zufuhreinrichtung 1001, welche einen ähnlichen Aufbau aufweist wie die Zufuhreinrichtung 1001 gemäss Fig. 7. Bei der Ausführung gemäss Fig. 8 umfasst die Deckelzuführung 41 jedoch eine Vielzahl von Führungsstangen 43, durch welche der Deckelstapel zur Abstapelvorrichtung geleitet werden kann.

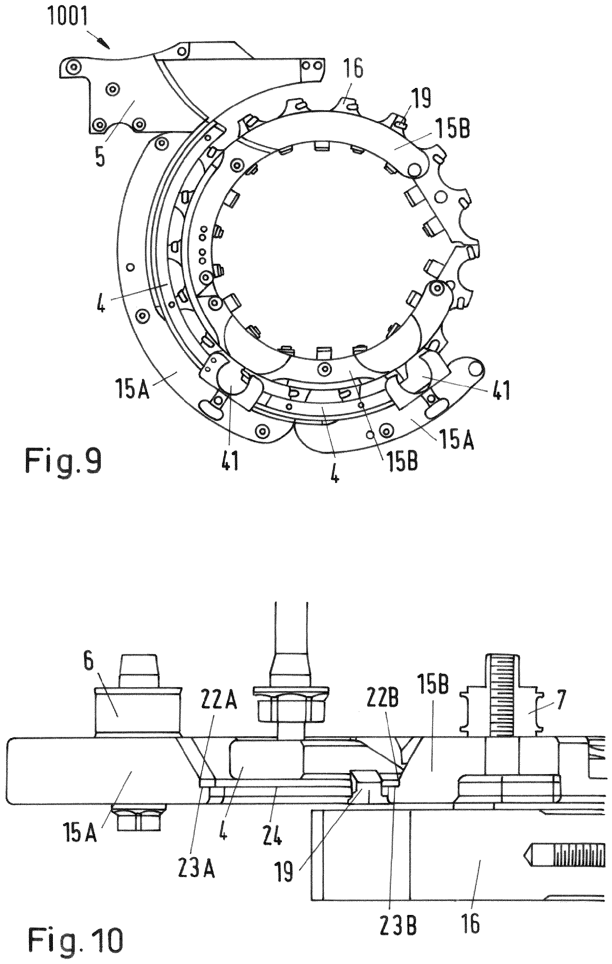

Fig. 9 zeigt eine Draufsicht einer erfindungsgemässen Zufuhreinrichtung 1001 und Fig. 10 zeigt eine Seitenansicht der Deckelführung 15A, 15B mit Niederhaltevorrichtung 4.

Die Bewegungsvorrichtung 16 ist sternförmig ausgestaltet, wobei auf jeder Sternspitze ein Mitnehmer 19 zur Aufnahme und Bewegung eines Deckels angebracht ist.

Die Deckelführung 15A, 15B umfasst die erste Schiene 15A und die zur ersten Schiene 15A abschnittsweise parallel verlaufende zweite Schiene 15B. Dabei umfassen die erste Schiene 15A und die zweite Schiene 15B jeweils eine Vielzahl von Schienenelementen, welche für einen Formatwechsel austauschbar sind, wobei die zweite Schiene 15B über der Bewegungsvorrichtung 16 angeordnet ist.

Dabei umfasst die erste Schiene 15A die erste Leitfläche 22A sowie die zweite Schiene 15B die zweite Leitfläche 22B derart, dass der Deckel durch die erste und die zweite Schiene 15A, 15B zum Behälter führbar ist.

Zusätzlich umfasst die erste Schiene 15A die erste Ablegefläche 23A sowie die zweite Schiene 15B die zweite Ablegefläche 23B derart, dass der Deckel über die erste und die zweite Schiene 15A, 15B zum Behälter führbar ist, also auf den Ablegeflächen 23A, 23B abgelegt und darüber zum Behälter bewegt wird.

Die Bewegungsvorrichtung 16 ist mit nach oben gerichteten Mitnehmern 19 unter der ersten und zweiten Schiene 15A, 15B angeordnet. Hierbei sind die Mitnehmer 19 in einer Ausnehmung 24 zwischen der ersten und zweiten Schiene 15A, 15B bewegbar.

Die erste und zweite Schiene 15A, 15B sind mit den Leit- und Ablegeflächen 22A, 22B, 23A, 23B so ausgestaltet, dass diese nach oben offen sind. Damit kann ein Reinigungsmedium ungehindert die Deckelauflage (also die Leit- und / oder Ablegeflächen) reinigen.

Des Weiteren umfasst die Deckelführung 15A, 15B eine Begasungsvorrichtung 5. Diese Begasungsvorrichtung 5 ist an einer dem Falzprozess / der Station zugewandten Seite der ersten Schiene 15A angeordnet.

Während die erste und zweite Schiene 15A, 15B so ausgeformt sind, dass der Deckel 101 radial geführt wird und sich somit vorzugsweise koradial zur Bewegungsvorrichtung 16 bewegt, ist die Begasungsvorrichtung 5 derart ausgeformt, dass der Deckel in einem Begasungsbereich der Begasungsvorrichtung 5 linear geführt wird. Dies hat den Vorteil, dass die Begasungswerte verbessert und die Übergabe zum Behälter optimiert werden kann.

Bei der Begasung durch die Begasungsvorrichtung 5 wird ein Gas wie beispielsweise ein Inertgas zu einer Unterseite des Deckels gefördert. Somit kann gewährleistet werden, dass ein Restvolumen des Behälters, in welchem kein Lebensmittel angeordnet ist, vor dem Verschliessen im Wesentlichen mit dem Gas befüllt ist, wobei die ursprünglich im Restvolumen vorhandene Luft durch das Gas möglichst vollständig verdrängt wird. Hiermit lässt sich gegebenenfalls eine längere Haltbarkeit des in dem Behälter angeordneten Lebensmittels erreichen.

Bevor die Deckel jedoch auf die Deckelführung 15A, 15B aufgelegt werden, findet der Abstapelprozess statt, bei welchem die Deckel von dem Stapel einzeln getrennt werden. Anschliessend liegt der Deckel wie vorangehend beschrieben, zwischen seitlichen Deckelführungen, also den Schienen 15A, 15B auf. Danach wird der Deckel von der als Deckelstern 16 ausgeformten Bewegungsvorrichtung 16 mithilfe der radial angebrachten Deckelmitnehmer 19 zwischen den seitlichen Deckelführungen 15A, 15B weiter bis zu einem definierten Punkt (dem Punkt B gemäss Fig. 3) transportiert. Die seitlichen Deckelführungen 15A, 15B bilden dabei zusammen betrachtet die Deckellaufbahn.

Die Schiene 15B ist dabei die innere Deckelführung 15B. Das Schienenelement der zweiten Schiene 15B, welches sich direkt unter der Abstapelvorrichtung befindet, muss bei einem Formatwechsel nicht getauscht werden. So werden Wechsel- und Stillstandzeiten verringert.

Der Deckel wird von der Abstapelvorrichtung bis hin zum Punkt B komplett zwischen den Schienen 15A, 15B aufgelegt und vorzugsweise parallel zur Führungsebene geführt und wird nicht auf den Deckelstern 16 abgelegt.

Ausserdem ist die Niederhaltevorrichtung 4 derart über den Schienen 15A, 15B angeordnet, dass eine Bewegbarkeit des Deckels nach oben eingeschränkt ist. So wird der Deckel gegen ein Herausfallen gesichert.

Die Schienen 15A, 15B umfassen ein Schnellwechselsystem 6, 7 in Form Schnellwechsel-Distanzbolzen 6 und 7. So können die Schienen 15A, 15B wiederholgenau getauscht werden. Dies erspart ein erneutes Einstellen des Formatteils nach einem Werkzeugwechsel, welches sich natürlich auf die Werkzeugwechselzeiten positiv ausschlägt.

Die Erfindung ist nicht auf die offenbarten Ausführungsformen beschränkt. Andere Variationen der offenbarten Ausführungsformen können von Fachleuten beim Praktizieren einer beanspruchten Erfindung aus einem Studium der Zeichnungen, der Offenbarung und der abhängigen Ansprüche verstanden und bewirkt werden. In den Ansprüchen schliesst das Wort "umfassend" keine anderen Elemente oder Schritte aus, und der unbestimmte Artikel "ein" oder "eine" schliesst keine Vielzahl aus. Die blosse Tatsache, dass bestimmte Massnahmen in voneinander verschiedenen abhängigen Ansprüchen wiederholt werden, bedeutet nicht, dass eine Kombination dieser Massnahmen nicht vorteilhaft verwendet werden kann. Jegliche Bezugszeichen in den Ansprüchen sollten nicht als Einschränkung des Umfangs ausgelegt werden.

## Patentansprüche

1. Zufuhreinrichtung zum Zuführen eines Deckels (101) zu einem Verschliesser (1000) umfassend
eine Deckelführung (15A, 15B) zum Führen des Deckels (101) entlang einer Führungsebene (E) zu dem Verschliesser (1000);
eine Deckelzufuhr zum Einbringen eines Deckels (101) in die Deckelführung (15A, 15B); und
eine an der Deckelführung (15A, 15B) angeordnete Bewegungsvorrichtung (10), welche derart beweglich angeordnet ist, dass der Deckel (101) durch die Bewegungsvorrichtung (16) entlang der Führungsebene (E) bewegbar ist,
**dadurch gekennzeichnet, dass**
die Deckelführung (15A, 15B) derart ausgeformt und an der Deckelzufuhr angeordnet ist, dass der Deckel (101) in der Deckelführung (15A, 15B) ausschliesslich parallel zur Führungsebene (E) bewegbar ist.

2. Zufuhreinrichtung nach Anspruch 1, wobei die Deckelführung (15A, 15B) derart an der Deckelzufuhr angeordnet ist, dass der Deckel (101) aus der Deckelzufuhr unmittelbar parallel zur Führungsebene (E) in die Deckelführung (15A, 15B) einbringbar ist.

3. Zufuhreinrichtung nach einem der vorangehenden Ansprüche umfassend eine Niederhaltevorrichtung (4, 4A, 4B), welche derart an der Deckelführung (15A, 15B) angeordnet ist, dass eine Bewegbarkeit des Deckels (101) in einer Raumrichtung einschränkbar ist.

4. Zufuhreinrichtung nach Anspruch 3, wobei die Niederhaltevorrichtung (4, 4A, 4B) eine Niederhaltefläche zur Einschränkung der Bewegbarkeit des Deckels (101) umfasst und die Niederhaltefläche parallel zur Führungsebene (E), insbesondere vollständig parallel zur Führungsebene (E), angeordnet ist.

5. Zufuhreinrichtung nach einem der vorangehenden Ansprüche, wobei die Deckelführung (15A, 15B) eine Ablegefläche (23A, 23B), insbesondere eine erste und zweite Ablegefläche (23A, 23B) umfasst, auf welcher der Deckel (101) ablegbar ist, wobei die Ablegefläche (23A, 23B) derart parallel, insbesondere vollständig parallel zur Führungsebene (E) verläuft, dass der Deckel (101) ausschliesslich parallel zur Führungsebene (E) bewegbar ist.

6. Zufuhreinrichtung nach einem der vorangehenden Ansprüche, wobei die Deckelzufuhr eine Deckelzuführung (41) zum Zuführen der Deckel (101) in einem Deckelstapel (111) und eine Abstapelvorrichtung (1) zum Vereinzeln von Deckeln (101) umfasst,
wobei die Deckelzuführung (41) derart an der Abstapelvorrichtung (1) angeordnet ist, dass die in dem Deckelstapel (111) zuführbaren Deckel (101) durch die Abstapelvorrichtung (1) vereinzelt werden können, und die Deckelführung (15A, 15B) an der Abstapelvorrichtung (1) angeordnet ist, sodass ein aus dem Deckelstapel (111) vereinzelter Deckel (101) von der Abstapelvorrichtung (1) in die Deckelführung (15A, 15B) einbringbar ist.

7. Zufuhreinrichtung nach Anspruch 6, wobei die Abstapelvorrichtung (1) ein Abstapelelement (10A), ein Abstützelement (10B) zum Abstützen des Deckelstapels (111) sowie eine Nut (11) zum Aufnehmen und Abführen eines abgetrennten Deckels (101) umfasst.

8. Zufuhreinrichtung nach Anspruch 7, wobei die Nut (11) in das Abstapelelement (10A) und das Abstützelement (10B) eingebracht ist, und die Zufuhreinrichtung (1001) ein Vereinzelungselement (51) umfasst, welches derart an einem ersten Ende der Nut (11) angeordnet ist, dass der Deckel (101) von dem Deckelstapel (111) abtrennbar ist.

9. Zufuhreinrichtung nach Anspruch 7 oder 8, wobei das Abstapelelement (10A) in einer Aussparung der Deckelführung (15A, 15B), insbesondere rotierbar in einer Aussparung der Deckelführung (15A, 15B) angeordnet ist.

10. Zufuhreinrichtung nach Anspruch 8 oder 9, wobei das Abstützelement (10B) ein vom Abstapelelement (10A) separates Element ist und an dem Abstapelelement (10A) angeordnet ist, sodass eine Abstützfläche (50) des Abstützelementes (10B) derart zu dem Vereinzelungselement (51) angeordnet ist, dass der Deckelstapel (111) auf der Abstützfläche (50) abstützbar ist und der Deckel (101) von dem Deckelstapel (111) abtrennbar ist.

11. Zufuhreinrichtung nach Anspruch 10, wobei eine Position der Abstützfläche (50) relativ zum Vereinzelungselement (51) veränderbar ist.

12. Zufuhreinrichtung nach Anspruch 11, wobei das Abstützelement (10B) derart austauschbar an dem Abstapelelement (10A) angeordnet ist, dass die Position der Abstützfläche (50) relativ zum Vereinzelungselement (51) veränderbar ist.

13. Zufuhreinrichtung nach Anspruch 11, wobei das Abstützelement (10B) derart verschiebbar an dem Abstapelelement (10A) angeordnet ist, dass die Position der Abstützfläche (50) relativ zum Vereinzelungselement (51) veränderbar ist.

14. Zufuhreinrichtung nach einem der vorangehenden Ansprüche, wobei die Deckelführung (15A, 15B) eine erste Leitfläche (22A) und eine zweite Leitfläche (22B) umfasst, wobei der Deckel (101) derart zwischen der ersten Leitfläche (22A) und der zweiten Leitfläche (22B) angeordnet werden kann, dass der Deckel (101) durch die relative Bewegung der Bewegungsvorrichtung (16) zu der ersten Leitfläche (22A) und der zweiten Leitfläche (22B) zu dem Verschliesser (1000) führbar ist.

15. Zufuhreinrichtung nach Anspruch 5 oder 14, wobei die Deckelführung (15A, 15B) eine erste Schiene (15A) und eine zur ersten Schiene (15A) parallel verlaufende zweite Schiene (15B) umfasst und die erste Schiene (15A) die erste Leitfläche (22A) und / oder die erste Ablegefläche (23A) sowie die zweite Schiene (15B) die zweite Leitfläche (22B) und / oder die zweite Ablegefläche (23B) derart umfasst, dass der Deckel (101) durch die erste und die zweite Schiene (15A, 15B) zum Verschliesser (1000) führbar ist.

16. Verschliesser, umfassend:
eine Station (14) mit einer Vielzahl von Verschliessvorrichtungen;
eine Behälterzufuhr (12) für Behälter (100), insbesondere mit einem Produkt gefüllte Behälter (100), zu der Station (14);
einen Zufuhreinrichtung (1001) nach einem der vorangehenden Ansprüche; und
einen Auslauf für verschlossene Behälter von der Station (14).

17. Verfahren zum Zuführen eines Deckels (101) zu einem Verschliesser (1000) nach Anspruch 16 umfassend
Einbringen des Deckels (101) in die Deckelführung (15A, 15B); Führen des Deckels (101) entlang der Führungsebene (E) zu dem Verschliesser (1000), wobei die Deckelführung (15A, 15B) derart ausgeformt und an der Deckelzufuhr angeordnet ist, dass der Deckel (101) in der Deckelführung (15A, 15B) ausschliesslich parallel zur Führungsebene (E) bewegt wird.
